# EUROPÄISCHE PATENTSCHRIFT

(11) **EP 3 148 709 B1**
(45) Veröffentlichungstag und Bekanntmachung des Hinweises auf die Patenterteilung: **11.04.2018**
(21) Anmeldenummer: 15718475.5
(22) Anmeldetag: 22.04.2015
(51) Int. Cl.: B05B 15/12

(54) **PULVERSPRÜHBESCHICHTUNGSKABINE**
POWDER SPRAY COATING BOOTH
CABINE DE PULVÉRISATION DE POUDRE

(30) Priorität: 26.05.2014 DE 102014107396
(43) Veröffentlichungstag der Anmeldung: 05.04.2017
(73) Patentinhaber: Gema Switzerland GmbH, 9015 St. Gallen (CH)
(72) Erfinder: MAUCHLE, Felix, CH-9030 Abtwil (CH); STEIGER, Peter, CH-9312 Häggenschwil (CH)
(74) Vertreter: Trinks, Ole
(86) Internationale Anmeldenummer: PCT/EP2015/058647
(87) Internationale Veröffentlichungsnummer: WO 2015/180893

(56) Entgegenhaltungen:
- DE-A1- 19 837 877
- DE-U1- 20 218 192
- US-A- 3 847 118

## Beschreibung

Die vorliegende Erfindung betrifft eine Pulversprühbeschichtungskabine gemäß dem Oberbegriff des unabhängigen Patentanspruchs 1.

Demgemäß betrifft die Erfindung insbesondere eine Pulversprühbeschichtungskabine, in welcher Gegenstände mit Hilfe einer Sprühvorrichtung mit Pulver beschichtbar sind. Um Luft und Überschusspulver aus dem Kabineninnenraum absaugen zu können, ist die Pulversprühbeschichtungskabine mit einer Absaugkanalanordnung versehen, die einen im Kabinenunterbau angeordneten Absaugkanal aufweist, dessen erstes Ende über mindestens eine Absaugöffnung mit dem Kabineninnenraum strömungsmäßig verbunden ist.

Eine Pulversprühbeschichtungskabine dieser Art ist beispielsweise aus der Druckschrift EP 0 839 583 A2 bekannt. Hierbei handelt es sich um eine vertikalzylindrische Kabine mit einem trichterförmigen Kabinenboden, welcher im Kabinenzentrum einen Sauganschluss für eine externe Saugquelle hat.

Eine ähnliche zylindrische Pulversprühbeschichtungskabine ist aus der Druckschrift DE 195 00 872 bekannt. Diese Pulversprühbeschichtungskabine hat zusätzlich zu dem als Absaugtrichter ausgebildeten Kabinenboden einen rinnenartigen Bodenrand entlang der Kabinenwand, über welchen getrennt vom Absaugstrom des Absaugtrichters ebenfalls Luft- und Pulverpartikel aus der Kabine absaugbar sind.

Aus der Druckschrift DE 198 37 877 A1 ist eine vertikalzylindrische Pulverbeschichtungskabine mit einer ebenen Bodenplatte bekannt. Durch die Bodenplatte erstreckt sich diametral ein Schlitz, in den auf dem Kabinenboden liegende Pulverpartikel durch eine rotierende Reinigungsvorrichtung geschoben werden können.

Sprühbeschichtungspulver wird üblicherweise pneumatisch zu Sprühvorrichtungen, sogenannten Sprühpistolen, gefördert und von diesen pneumatisch und durch elektrostatische Unterstützung auf die zu beschichtenden Objekte gesprüht. In den Sprühbeschichtungskabinen wird üblicherweise während des Sprühbeschichtungsbetriebes ein kleiner Unterdruck aufrechterhalten, damit keine Pulverpartikel aus der Sprühbeschichtungskabine nach außen dringen. Der während des Sprühbeschichtungsbetriebes in den Sprühbeschichtungskabinen üblicherweise aufrechterhaltene Unterdruck dient ferner dazu, Überschusspulver, d.h. vom Objekt abprallende oder an ihm vorbeigesprühte Pulverpartikel, abzusaugen.

Bei Pulversprühbeschichtungskabinen der gattungsgemäßen Art wird Überschusspulver abgesaugt, um hohe Pulverkonzentrationen im Kabineninnenraum zu vermeiden, welche unter Umständen zu Pulverstaub-Explosionen führen können. Des Weiteren dient das Absaugen von Überschusspulver zur Rückgewinnung und Wiederverwertung des Pulvers.

Zur Rückgewinnung von überschüssigem Pulver, also Pulver, welches an dem zu beschichtenden Objekt vorbeigesprüht wurde oder vom Objekt abfällt, ist es bekannt, einen Pulverabscheider beispielsweise in Gestalt eines Filtersystems strömungsmäßig über eine Absaugöffnung mit dem Kabineninnenraum der Pulversprühbeschichtungskabine zu verbinden. Ein Sauggebläse, welches beispielsweise an einem Luftauslass des Filtersystems angeschlossen ist, saugt aus dem Kabineninnenraum der Pulversprühbeschichtungskabine zumindest einen Großteil des Überschusspulvers und Luft durch das Filtersystem hindurch ab. Das abgesaugte Pulver wird in dem Filtersystem von der Saugluft getrennt und fällt in einen Pulverbehälter, aus welchem es zusammen mit frischem Beschichtungspulver wieder einer Sprühvorrichtung zur Sprühbeschichtung von Objekten in der Pulversprühbeschichtungskabine zugeführt werden kann. Die in dem Filtersystem von dem abgesaugten Überschusspulver gereinigte Luft gelangt durch das Sauggebläse in die Raumatmosphäre des Aufstellraums der Pulversprühbeschichtungskabine.

Andererseits ist es ebenfalls bekannt, anstelle eines Filtersystems als Pulverabscheider zum Abtrennen von Pulver aus der Absaugluft ein Zyklonsystem einzusetzen. Bei Verwendung eines Zyklonsystems, welches beispielsweise aus einem oder mehreren Zyklonen aufgebaut ist, saugt ein Sauggebläse Überschusspulver und Luft aus dem Kabineninnenraum durch das Zyklonsystem, wobei in dem Zyklonsystem die Pulver-Luft-Strömung durch Zyklon-Zentrifugalkräfte in Luft und Pulver getrennt wird. Das abgetrennte Pulver fällt in einen Auffangbehälter unter dem Zyklonsystem, während die von Pulver gereinigte Luft in der Regel über einen Nach-Filter in die Außenatmosphäre geblasen wird. Zyklonsysteme benötigen in der Regel einen solchen Nach-Filter, weil sie feine Pulverpartikel nicht so vollständig vom Luftstrom trennen können, wie es bei einem Filtersystem der Fall ist. Das von dem Zyklonsystem ausgeschiedene Pulver wird in der Regel als Abfall behandelt, könnte jedoch auch aufbereitet und wieder zur Sprühbeschichtung verwendet werden.

Pulversprühbeschichtungskabinen, die für kurze Beschichtungszeiten mit einer bestimmten Pulversorte oder für häufigen Wechsel der Pulversorte verwendet werden, sind häufig zylinderförmig ausgebildet, da die Reinigung von zylinderförmigen Pulverbeschichtungskabinen im Vergleich zu Pulversprühbeschichtungskabinen mit einem rechteckigen Kabineninnenraum schneller gereinigt werden können und somit einen schnellen Farbwechsel ermöglichen.

Unter dem hierin verwendeten Begriff "Farbwechsel" wird der Wechsel von einer Pulversorte auf eine andere Pulversorte, insbesondere auf eine andere Pulverfarbe verstanden. Bei einer großen Farbpalette und kurzen Beschichtungsperioden für die einzelnen Pulversorten sind die Stillstandszeiten zum Reinigen der Pulversprühbeschichtungskabine und der zum Einsatz kommenden Pulverabscheider beim Wechsel von einer Pulversorte zu einer anderen Pulversorte nicht unerheblich, infolgedessen der Betrieb der Pulversprühbeschichtungskabine zumindest dann kostspielig und ineffizient wird, wenn keine Haupt-Farbe während mehr als 50 % der Betriebszeit der Pulversprühbeschichtungskabine eingesetzt wird.

Durch die Erfindung soll die Aufgabe gelöst werden, eine Pulversprühbeschichtungskabine der eingangs genannten Art dahingehend weiterzubilden, dass ein Pulverwechsel auch dann schnell durchgeführt werden kann, wenn der Kabineninnenraum eine rechteckige Form aufweist, insbesondere bei Pulversprühbeschichtungskabinen, bei denen eine Haupt-Farbe während mehr als 50 % der Betriebszeit der Sprühbeschichtungskabine eingesetzt wird.

Diese Aufgabe wird gemäß der Erfindung durch den Gegenstand des unabhängigen Patentanspruches 1 gelöst, wobei vorteilhafte Weiterbildungen der erfindungsgemäßen Pulversprühbeschichtungskabine in den Unteransprüchen angegeben sind.

Demgemäß ist insbesondere vorgesehen, dass bei einer Pulversprühbeschichtungskabine der eingangs genannten Art der im Kabinenunterbau angeordnete Absaugkanal über einen ebenfalls vorzugsweise im Kabinenunterbau angeordneten Verteiler mit mindestens zwei aus dem Kabinenunterbau herausgeführten Kanalabschnitten strömungsmäßig verbunden oder verbindbar ist.

Die erfindungsgemäße Lösung ermöglicht es, dass der Absaugkanal der Pulversprühbeschichtungskabine wahlweise mit verschiedenen Pulverabscheidern, wie etwa Zyklonsystemen und/oder Filtersystemen, strömungsmäßig verbunden werden kann. Auf diese Weise kann ein erster Pulverabscheider im Beschichtungsbetrieb mit einer ersten Pulversorte/-farbe und ein weiter (zweiter) Pulverabscheider im Beschichtungsbetrieb mit einer anderen Pulversorte/-farbe verwendet werden kann, ohne dass ein Austausch des Pulverabscheiders oder eine intensive Reinigung des Pulverabscheiders erforderlich wäre, was nachteilig im Hinblick auf einen schnellen Pulverwechsel mit nur noch geringe Stillstandszeiten beim Pulverwechsel wäre.

Dadurch, dass bei der erfindungsgemäßen Lösung nicht nur der Absaugkanal, sondern auch der Verteiler der Absaugkanalanordnung, über den der Absaugkanal in mindestens zwei Kanalabschnitte aufgeteilt wird, im Kabinenunterbau der Pulversprühbeschichtungskabine angeordnet ist, ist ferner eine kompakte Bauweise der Pulversprühbeschichtungskabine gewährleistet, deren Standfläche im Vergleich zu herkömmlichen, aus dem Stand der Technik bekannten Pulversprühbeschichtungskabinen unverändert ist.

In einer leicht zu realisierenden aber dennoch effektiven Ausgestaltung der erfindungsgemäßen Pulversprühbeschichtungskabine ist der im Kabinenunterbau angeordnete Verteiler als T- oder Y-Teil mit einem Einlass und zwei Auslässen ausgebildet. Der Einlass des Verteilers ist strömungsmäßig mit dem Absaugkanal verbunden bzw. verbindbar, während die beiden Auslässe des Verteilers jeweils mit einem aus dem Kabinenunterbau herausgeführten Kanalabschnitt strömungsmäßig verbunden oder verbindbar sind.

Auf diese Weise ist es möglich, an der Absaugkanalanordnung zwei unabhängig voneinander wirkende Pulverabscheider anzuschließen, wobei - abhängig von der im Pulversprühbeschichtungsbetrieb versprühten Pulversorte - einer der beiden Pulverabscheider strömungsmäßig mit dem Absaugkanal der Absaugkanalanordnung verbunden wird.

Alternativ hierzu ist es gleichwohl denkbar, den im Kabinenunterbau der Pulversprühbeschichtungskabine angeordneten Verteiler kreuz- oder sternförmig auszubilden, so dass der Verteiler zusätzlich zu einem Einlass eine Vielzahl (mehr als zwei) von Auslässen aufweist. Dabei ist der Einlass des Verteilers strömungsmä-ßig mit dem im Kabinenunterbau angeordneten Absaugkanal verbunden oder verbindbar, während die Vielzahl der Auslässe des Verteilers jeweils mit einem aus dem Kabinenunterbau herausgeführten Kanalabschnitt strömungsmäßig verbunden oder verbindbar sind.

Bei dieser Ausführungsform ist es somit möglich, mehr als zwei Pulverabscheider an die Pulversprühbeschichtungskabine anzuschließen, so dass die Pulversprühbeschichtungskabine ausgelegt ist, für mehr als zwei Pulversorten bzw. Pulverarten verwendet zu werden, ohne dass bei einem Pulverwechsel längere Stillstandszeiten zum Reinigen der Pulversprühbeschichtungskabine bzw. Pulverabscheider oder zum Austauschen der/des Pulverabscheider/ Pulverabscheiders anfallen.

In einer bevorzugten Weiterbildung der erfindungsgemäßen Pulversprühbeschichtungskabine ist eine Strömungs-Umschalteinrichtung vorgesehen, um wahlweise eine strömungsmäßige Verbindung zwischen dem im Kabinenunterbau angeordneten Absaugkanal und einem der mindestens zwei aus dem Kabinenunterbau herausgeführten Kanalabschnitte wahlweise auszubilden oder zu trennen. In diesem Zusammenhang ist es beispielsweise denkbar, dass die Strömungs-Umschalteinrichtung mindestens eine Ventilklappe oder mindestens einen Ventilschieber aufweist.

Besonders bevorzugt in diesem Zusammenhang ist es, wenn die Strömungs-Umschalteinrichtung je aus dem Kabinenunterbau herausgeführten Kanalabschnitt genau eine Ventilklappe oder einen Ventilschieber aufweist, um bedarfsweise eine strömungsmäßige Verbindung zwischen dem betreffenden Kanalabschnitt und einem dem Kanalabschnitt zugeordneten Pulverabscheider zu trennen.

Nachfolgend wird unter Bezugnahme auf die Zeichnungen eine exemplarische Ausführungsform der erfindungsgemäßen Pulversprühbeschichtungskabine näher beschrieben.

Es zeigen:
- Fig. 1: schematisch in einer Draufsicht eine exemplarische Ausführungsform der erfindungsgemäßen Pulversprühbeschichtungskabine in einem ersten Betriebszustand; und
- Fig. 2: schematisch in einer Draufsicht die exemplarische Ausführungsform der erfindungsgemäßen Pulversprühbeschichtungskabine in einem zweiten Betriebszustand.

Die in den Zeichnungen dargestellte Pulversprühbeschichtungskabine 1 nach der Erfindung enthält zwei einander diametral gegenüber liegend angeordnete Objekt-Wanddurchgänge 2 und 4 für den Transport von zu beschichtenden Objekten durch die Pulversprühbeschichtungskabine 1. Des Weiteren ist die Pulversprühbeschichtungskabine 1 mit einem Kabinenboden 3 versehen.

Die Breite der Objekt-Wanddurchgänge 2 und 4 begrenzt die maximale Breite des Objekt-Transportweges, d.h. die maximale Breite der in der Pulversprühbeschichtungskabine 1 beschichtbaren Objekte.

Außerhalb der Pulversprühbeschichtungskabine 1 sind seitlich der Kabine Positioniervorrichtungen 5, beispielsweise in Gestalt von Hubständern, angeordnet, welche jeweils mindestens eine (in den Zeichnungen genau zwei) Sprühvorrichtungen 6 tragen und vertikal auf- und abbewegt werden können zur Beschichtung eines im Kabineninnenraum der Pulversprühbeschichtungskabine 1 mit Pulver zu beschichtenden Gegenstandes. Hierzu ragen die Sprühvorrichtungen 6 von der Positioniervorrichtung 5 jeweils durch einen vertikalen Wandschlitz 7 der Pulversprühbeschichtungskabine 1 bis in den Kabineninnenraum der Kabine hinein.

Der zu beschichtende Gegenstand wird von einer Transportvorrichtung, beispielsweise einer endlosen Förderkette, quer zur Längsrichtung der Sprühvorrichtungen 6 durch die Pulversprühbeschichtungskabine 1 transportiert.

Die Sprühvorrichtungen 6 weisen vorzugsweise eine oder mehrere Hochspannungselektroden zur elektrostatischen Aufladung des Beschichtungspulvers und einen Hochspannungserzeuger zur Erzeugung der Hochspannung für die Hochspannungselektroden auf.

Die in den Zeichnungen schematisch dargestellte Pulversprühbeschichtungskabine 1 hat eine im Horizontalschnitt gesehen rechteckige Kabinenwand und einen Kabinenboden 3, der den Kabineninnenraum der Pulversprühbeschichtungskabine 1 von dem Kabinenunterbau trennt.

Im Rahmen der vorliegenden Beschreibung werden alle Elemente, welche sich in einer Pulversprühbeschichtungskabine 1 unterhalb des Bewegungsweges der zu beschichtenden Beschichtungsobjekte und unterhalb von den Sprühstrahlen von Sprühvorrichtungen befinden, welche letztere auch als Sprühpistolen bezeichnet werden, insgesamt als "Kabinenboden" bezeichnet. Als "Kabinenunterbau" wird der Raum unterhalb des Kabinenbodens 3 bezeichnet.

In dem Kabinenboden 3 der Pulversprühbeschichtungskabine 1 ist mindestens ein sich in Längsrichtung erstreckender Bodenlängsspalt 8 gebildet. Über diesen mindestens einen Bodenlängsspalt 8 ist der Kabineninnenraum der Pulversprühbeschichtungskabine 1 strömungsmäßig mit einem Absaugkanal 9 verbunden. In den Zeichnungen ist der Absaugkanal 9 mit gestrichelten Linien dargestellt, da sich dieser unterhalb des Kabinenbodens 3, d.h. in dem Kabinenunterbau der Pulversprühbeschichtungskabine 1 angeordnet ist. Wie es ferner den Zeichnungen entnommen werden kann, erstreckt sich der im Kabinenunterbau angeordnete Absaugkanal 9 vorzugsweise über die gesamte Kabinenlänge.

Der im Kabinenunterbau angeordnete Absaugkanal 9 gehört zu einer Absaugkanalanordnung, über welche Überschusspulver aus dem Kabineninnenraum absaugbar ist. Hierzu wird das beim Versprühen von Beschichtungspulver abfallende Überschusspulver durch den mindestens einen Bodenlängsspalt 8 in den Absaugkanal 9 abgesaugt. Der Absaugkanal 9 ist über ein Fluidleitungssystem an mindestens einer Pulverabsaugvorrichtung, vorzugsweise an mindestens einen Pulverabscheider zur Pulverrückgewinnung angeschlossen.

Bei der in den Zeichnungen dargestellten exemplarischen Ausführungsform der erfindungsgemäßen Pulversprühbeschichtungskabine 1 kommen als Pulverrückgewinnungsvorrichtung zwei unabhängig voneinander zuschaltbare Pulverabscheider 10, 20 zur Rückgewinnung des aus dem Kabineninnenraum abgesaugten Überschusspulvers zum Einsatz:
Zum einen ist ein hier als Filtereinheit ausgebildeter erster Pulverabscheider 10 vorgesehen, der dazu dient, um Pulver aus dem aus dem Kabineninnenraum abgesaugten Pulver-Luft-Saugstrom abzuscheiden, und um anschließend vom Pulver gereinigte Luft in die Umgebung auszublasen.

Das von der Filtereinheit des ersten Pulverabscheiders 10 abgeschiedene Pulver fällt in einen Pulverbehälter und kann dann, vorzugsweise zusammen mit frischem Pulver, über eine Pulverleitung wieder den Sprühvorrichtungen 6 zugeführt werden. Im Strömungsweg zwischen der Filtereinheit und dem Pulverbehälter können Mittel zur Aufbereitung des Pulvers angeordnet werden, beispielsweise ein Sieb.

Zum anderen ist bei der in den Zeichnungen schematisch dargestellten Ausführungsform als weiterer Pulverabscheider 20 beispielsweise eine Zykloneinheit 21 mit einer nachgeschalteten Filtereinheit (Nach-Filter 22) vorgesehen. Die Zykloneinheit 21 hat ein Zyklon-Strömungseinlass 21a und einen Zyklon-Luftauslass 21b sowie auf dem Strömungsweg dazwischen eine Zyklonvorrichtung zum Abscheiden von Pulver aus dem Pulver-Luft-Saugstrom durch Zyklon-Zentrifugalkräfte. Der Zyklon-Strömungseinlass 21a ist am stromaufwärtigen Anfang einer Zyklonleitung (Rohr oder Schlauch) gebildet. Der Zyklon-Luftauslass 21b ist an den Nach-Filter 22 angeschlossen, welcher den Rest an Pulver, welcher von der Zyklonvorrichtung nicht abgeschieden werden kann, ausfiltert.

Wie auch bei der Filtereinheit des ersten Pulverabscheiders 10 fällt das von dem Nach-Filter 22 abgeschiedene Pulver in einen Pulverbehälter und kann dann, vorzugsweise zusammen mit frischem Pulver, über eine Pulverleitung wieder den Sprühvorrichtungen 6 zugeführt werden. Das von der Zykloneinheit 21 des zweiten Pulverabscheiders 20 aus dem Pulver-Luft-Strom ausgeschiedene Pulver fällt durch einen Zyklon-Pulverauslass am unteren Zyklonende in einen Sammelbehälter. Das Pulver des Sammelbehälters kann als Abfall behandelt oder in gleicher Weise aufbereitet und wieder zu den Sprühvorrichtungen 6 zurückgeführt werden, wie das Pulver des Pulverbehälters der Filtereinheit.

Obwohl bei der in den Zeichnungen dargestellten exemplarischen Ausführungsform als erster Pulverabscheider 10 eine Filtereinheit und als zweiter Pulverabscheider 20 eine Zykloneinheit 21 mit einer nachgeschalteten Filtereinheit vorgesehen sind, ist diese Realisierung der Pulverabscheider 10, 20 nicht als einschränkend anzusehen. Vielmehr ist es beispielsweise auch möglich, beide Pulverabscheider 10, 20 jeweils als Filtereinheit oder als Zykloneinheit mit nachgeschalteter Filtereinheit auszubilden.

Um die Strömung des Pulver-Luft-Gemisches wahlweise durch den ersten Pulverabscheider 10 oder durch den zweiten Pulverabscheider 20 zu leiten, weist die Pulversprühbeschichtungskabine 1 einen im Kabinenunterbau angeordneten Verteiler 30 mit mindestens zwei aus dem Kabinenunterbau herausgeführten Kanalabschnitten 31, 32 auf.

In der in den Zeichnungen dargestellten exemplarischen Ausführungsform ist der im Kabinenunterbau angeordnete Verteiler 30 T-förmig ausgebildet und weist einen mit dem Absaugkanal 8 strömungsmäßig verbundenen Einlass auf. Die beiden Auslässe des Verteilers 30 sind jeweils mit einem aus dem Kabinenunterbau herausgeführten (seitlich herausgeführten) Kanalabschnitt 31, 32 strömungsmäßig verbunden.

Jedem Kanalabschnitt 31, 32 ist eine Strömungs-Umschalteinrichtung 33, 34 zugeordnet, um bedarfsweise eine strömungsmäßige Verbindung zwischen dem betreffenden Kanalabschnitt 31, 32 und einem dem Kanalabschnitt 31, 32 zugeordneten Pulverabscheider 10, 20 zu trennen.

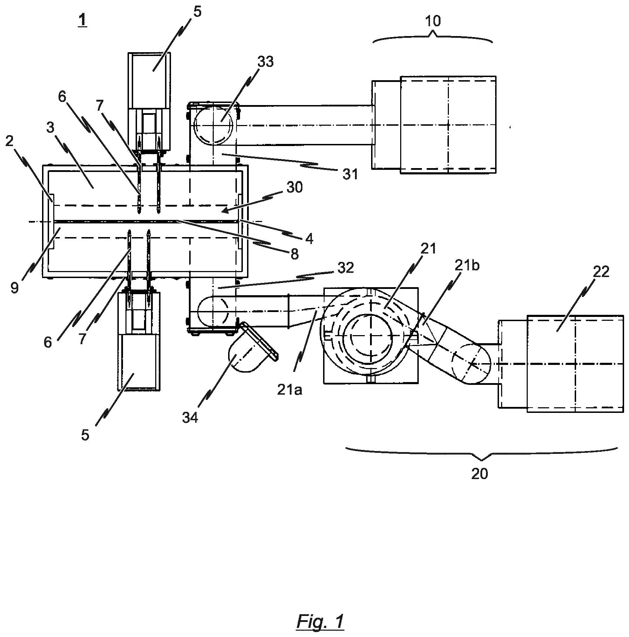

Bei dem in Fig. 1 schematisch dargestellten Betriebszustand der exemplarischen Ausführungsform der erfindungsgemäßen Pulversprühbeschichtungskabine 1 ist beispielsweise die dem unteren Kanalabschnitt 32 zugeordnete Strömungs-Umschalteinrichtung 32 geöffnet, so dass der untere Kanalabschnitt 32 strömungsmäßig mit dem zugeordneten zweiten Pulverabscheider 20 (hier: Zykloneinheit und dem Nach-Filter) verbunden ist.

Gleichzeitig ist die dem oberen Kanalabschnitt 31 zugeordnete Strömungs-Umschalteinrichtung 33 geschlossen, so dass eine strömungsmäßige Verbindung zwischen dem oberen Kanalabschnitt 31 und dem zugehörigen ersten Pulverabscheider 10 (hier Filtereinrichtung) getrennt ist.

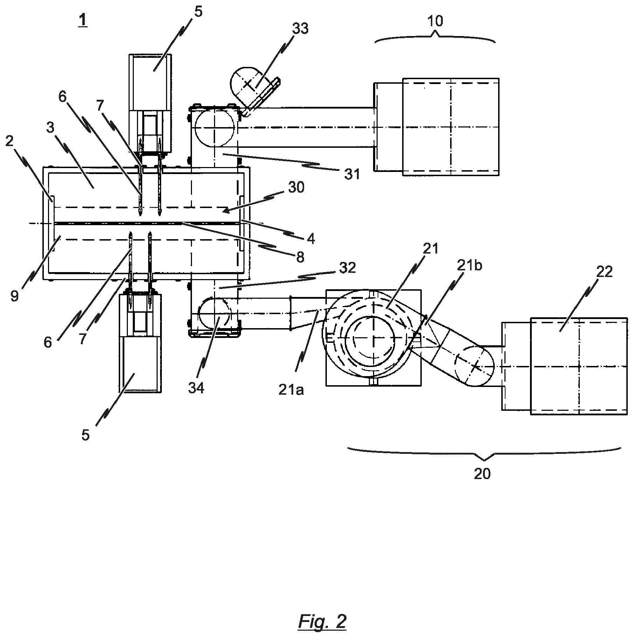

In Fig. 2 ist ein Betriebszustand der Pulversprühbeschichtungskabine 1 gezeigt, in welchem die dem oberen Kanalabschnitt 31 zugeordnete Strömungs-Umschalteinrichtung 33 geöffnet und die dem unteren Kanalabschnitt 32 zugeordnete Strömungs-Umschalteinrichtung 34 geschlossen ist. Infolgedessen ist der obere Kanalabschnitt 31 strömungsmäßig mit dem entsprechend zugeordneten ersten Pulverabscheider 10 strömungsmäßig verbunden, während eine strömungsmäßige Verbindung zwischen dem unteren Kanalabschnitt 32 und dem zugeordneten zweiten Pulverabscheider 20 getrennt ist.

Bei der in den Zeichnungen dargestellten Ausführungsform sind die Strömungs-Umschalteinrichtungen 33, 34 jeweils als manuell betätigbare Absperrorgane ausgeführt, die zum Freigeben/Blockieren der strömungsmäßigen Verbindung zwischen dem entsprechenden Kanalabschnitt 31, 32 und dem zugehörigen Pulverabscheider 10, 20 in den Strömungsweg aus- bzw. einfahrbar sind. Selbstverständlich ist es aber auch denkbar, diese Absperrorgane elektrisch, pneumatisch oder hydraulisch betätigbar auszuführen. Auch ist es denkbar, andere Ausführungsformen für die Strömungs-Umschalteinrichtungen 33, 34 zu wählen, wie beispielsweise Ventilklappen, Ventilschieber etc.

Bei der erfindungsgemäßen Pulversprühbeschichtungskabine 1 ist ein MehrFarben-Betrieb ohne aufwendige Reinigung beim Farbwechsel möglich, da unterschiedliche Pulverabscheider 10, 20 bei Bedarf zugeschaltet werden können. Wenn beispielsweise der erste Pulverabscheider 10 einer bestimmten (Haupt-Farbe) zugeordnet ist, kann bei einem Farbwechsel von der Haupt-Farbe auf eine andere Farbe die strömungsmäßige Verbindung zwischen dem ersten Pulverabscheider 10 und dem Kabineninnenraum getrennt werden, während eine strömungsmäßige Verbindung zwischen dem Kabineninnenraum und dem zweiten Pulverabscheider 20 geöffnet wird.

Die Erfindung ist nicht auf Ausführungsformen beschränkt, bei denen lediglich zwei unterschiedliche Pulverabscheider 10 ,20 zum Einsatz kommen. Vielmehr ist es auch denkbar, noch mehr Pulverabscheider wahlweise zuzuschalten. In diesem Fall sollte der im Kabinenunterbau vorgesehene Verteiler 30 eine sternförmige Konfiguration aufweisen.

Die Erfindung zeichnet sich insbesondere auch dadurch aus, dass der Großteil der Absaugkanalanordnung im Kabinenunterbau der Pulversprühbeschichtungskabine 1 angeordnet ist, so dass der Aufstellplatz für die Pulversprühbeschichtungskabine 1 im Wesentlichen unverändert bleibt.

Die Erfindung ist nicht auf Pulversprühbeschichtungskabinen beschränkt, deren Kabineninnenraum im Wesentlichen quaderförmig ausgeführt ist. Vielmehr ist die Erfindung selbstverständlich auch in Kombination mit einer aufrecht stehenden zylindrischen Kabine vorteilhaft.

## Patentansprüche

1. Pulversprühbeschichtungskabine (1), in welcher Gegenstände mit Hilfe von mindestens einer Sprühvorrichtung (6) mit Pulver beschichtbar sind, wobei die Pulversprühbeschichtungskabine (1) eine Absaugkanalanordnung aufweist zum Absaugen von Luft und Überschusspulver aus dem Kabineninnenraum der Pulversprühbeschichtungskabine (1), und wobei die Absaugkanalanordnung einen im Kabinenunterbau angeordneten Absaugkanal (9) aufweist, der über mindestens eine Absaugöffnung (8) mit dem Kabineninnenraum strömungsmäßig verbunden ist, wobei der Absaugkanal (9) ferner über einen im Kabinenunterbau angeordneten Verteiler (30) mit mindestens zwei aus dem Kabinenunterbau herausgeführten Kanalabschnitten (31, 32) strömungsmäßig verbunden oder verbindbar ist,
**dadurch gekennzeichnet,**
**dass** der Verteiler (30) als T- oder Y-Teil mit einem Einlass und zwei Auslässen ausgebildet ist, wobei der Einlass des Verteilers (30) strömungsmä-ßig mit dem Absaugkanal (9) und die beiden Auslässe des Verteilers (30) jeweils mit einem aus dem Kabinenunterbau herausgeführten Kanalabschnitt (31, 32) strömungsmäßig verbunden oder verbindbar sind; oder dass der Verteiler (30) kreuz- oder sternförmig ausgebildet ist und einen Einlass und eine Vielzahl von Auslässen aufweist, wobei der Einlass des Verteilers (30) strömungsmäßig mit dem Absaugkanal (9) verbunden oder verbindbar ist und die Vielzahl der Auslässe des Verteilers (30) jeweils mit einem aus dem Kabinenunterbau herausgeführten Kanalabschnitt (31, 32) strömungsmäßig verbunden oder verbindbar sind.

2. Pulversprühbeschichtungskabine (1) nach Anspruch 1,
wobei der im Kabinenunterbau vorgesehene Absaugkanal (9) vorzugsweise zentral angeordnet ist, und wobei der Absaugkanal (9) über mindestens einen Absaugschlitz mit dem Kabineninnenraum strömungsmäßig verbunden ist.

3. Pulversprühbeschichtungskabine (1) nach Anspruch 1 oder 2,
wobei eine Strömungs-Umschalteinrichtung vorgesehen ist zum wahlweisen Ausbilden und Trennen einer strömungsmäßigen Verbindung zwischen dem im Kabinenunterbau angeordneten Absaugkanal (9) und einem der mindestens zwei aus dem Kabinenunterbau herausgeführten Kanalabschnitte (31, 32).

4. Pulversprühbeschichtungskabine (1) nach Anspruch 1 oder 2,
wobei jedem aus dem Kabinenunterbau herausgeführten Kanalabschnitt (31, 32) ein Pulverabscheider (10, 20) zugeordnet ist, mit dem der betreffende Kanalabschnitt (31, 32) über eine dem betreffende Kanalabschnitt (31, 32) zugeordnete Strömungs-Umschalteinrichtung (33, 34) wahlweise strömungsmäßig verbunden und verbindbar ist.

5. Pulversprühbeschichtungskabine (1) nach Anspruch 3 oder 4,
wobei die Strömungs-Umschalteinrichtung (33, 34) mindestens eine Ventilklappe oder mindestens einen Ventilschieber und vorzugsweise je aus dem Kabinenunterbau herausgeführten Kanalabschnitt (31, 32) genau eine Ventilklappe oder genau einen Ventilschieber aufweist zum bedarfsweisen Trennen einer strömungsmäßigen Verbindung zwischen dem betreffenden Kanalabschnitt und einem dem Kanalabschnitt (31, 32) zugeordneten Pulverabscheider (10, 20).

6. Pulversprühbeschichtungskabine (1) nach Anspruch 4 oder 5,
wobei der Pulverabscheider ein Zyklonsystem (21) und/oder Filtersystem (22) aufweist.

7. Pulversprühbeschichtungskabine (1) nach einem der Ansprüche 1 bis 6,
wobei ein erster aus dem Kabinenunterbau heraus geführter Kanalabschnitt (31) strömungsmäßig mit einem ersten Pulverabscheider (10) verbunden oder verbindbar ist, und wobei ein zweiter aus dem Kabinenunterbau herausgeführter Kanalabschnitt (32) strömungsmäßig mit einem zweiten Pulverabscheider (20) verbunden oder verbindbar ist, und wobei der erste Pulverabscheider (10) einer ersten in der Pulversprühbeschichtungskabine (1) zu versprühenden oder versprühten Pulversorte oder Pulverfarbe und der zweite Pulverabscheider (20) einer zweiten in der Pulversprühbeschichtungskabine (1) zu versprühenden oder versprühten Pulversorte oder Pulverfarbe zugeordnet ist.

## Claims

1. A powder spray coating booth (1) in which objects can be coated with powder by means of a spraying device (6), wherein the powder spray coating booth (1) comprises a suction channel arrangement for suctioning air and excess powder out of the booth interior of the powder spray coating booth (1), and wherein the suction channel arrangement has a suction channel (9) disposed in the booth substructure which is fluidly connected to the booth interior by means of at least one exhaust vent (8), wherein the suction channel (9) is further fluidly connected or connectable to at least two channel sections (31, 32) leading out of the booth substructure by means of a manifold (30) arranged in the booth substructure,
**characterized in that**
the manifold (30) is configured as a T-piece or a Y-piece having one inlet and two outlets, wherein the inlet of the manifold (30) is fluidly connected or connectable to the suction channel (9) and the two outlets of the manifold (30) are each fluidly connected or connectable to a respective one of the channel sections (31, 32) leading out of the booth substructure; or the manifold (30) is of cross-shaped or star-shaped configuration and comprises one input and a plurality of outlets, wherein the inlet of the manifold (30) is fluidly connected or connectable to the suction channel (9) and the plurality of outlets of the manifold (30) are each fluidly connected or connectable to a respective one channel section (31, 32) leading out of the booth substructure.

2. The powder spray coating booth (1) according to claim 1,
wherein the suction channel (9) provided in the booth substructure is preferably centrally arranged, and wherein the suction channel (9) is fluidly connected to the booth interior by means of a least one suction slot.

3. The powder spray coating booth (1) according to claim 1 or 2,
wherein a flow-switching device is provided to alternatingly form and cut off a fluid connection between the suction channel (9) disposed in the booth substructure and one of the at least two channel sections (31, 32) leading out of the booth substructure.

4. The powder spray coating booth (1) according to claim 1 or 2,
wherein each of the channel sections (31, 32) leading out of the booth substructure is associated with a powder separator (10, 20) to which the respective channel section (31, 32) can be alternatingly fluidly connected and connectable by means of a flow-switching device (33, 34) allocated to the respective channel section (31, 32).

5. The powder spray coating booth (1) according to claim 3 or 4,
wherein the flow-switching device (33, 34) comprises at least one valve flap or at least one valve gate and preferably exactly one valve flap or exactly one valve gate per channel section (31, 32) leading out of the booth substructure in order to cut off a fluid connection between the relevant channel section and the powder separator (10, 20) associated with said channel section (31, 32) as needed.

6. The powder spray coating booth (1) according to claim 4 or 5,
wherein the powder separator comprises a cyclone system (21) and/or a filter system (22).

7. The powder spray coating booth (1) according to one of claims 1 to 6,
wherein a first channel section (31) leading out of the booth substructure is fluidly connected or connectable to a first powder separator (10), and wherein a second channel section (32) leading out of the booth substructure is fluidly connected or connectable to a second powder separator (20), and wherein a first type of powder or color of powder being or to be sprayed in the powder spray coating booth (1) is associated with the first powder separator (10) and a second type of powder or color of powder being or to be sprayed in the powder spray coating booth (1) is associated with the second powder separator (20).

## Revendications

1. Cabine de revêtement par pulvérisation de poudre (1) dans laquelle des objets peuvent être revêtus d'une poudre à l'aide d'au moins un dispositif de pulvérisation (6),
dans laquelle
la cabine de revêtement par pulvérisation de poudre comprend un ensemble de canal d'aspiration pour aspirer de l'air et de la poudre excédentaire hors de l'intérieur de la cabine de revêtement par pulvérisation de poudre (1),
et l'ensemble de canal d'aspiration comprend un canal d'aspiration (9) agencé dans la structure de base de la cabine, qui est relié en termes d'écoulement à l'intérieur de la cabine par au moins une ouverture d'aspiration (8),
le canal d'aspiration (9) est en outre relié ou susceptible d'être relié en termes d'écoulement à au moins deux tronçons de canal (31, 32) sortant de la structure de base de la cabine par l'intermédiaire d'un distributeur (30) agencé dans la structure de base de la cabine,
**caractérisée en ce que**
le distributeur (30) est réalisé sous forme de pièce en T ou en Y avec une entrée et avec deux sorties, l'entrée du distributeur (30) étant reliée ou susceptible d'être reliée en termes d'écoulement au canal d'aspiration (9) et les deux sorties du distributeur (30) étant reliées ou susceptibles d'être reliées en termes d'écoulement à un tronçon de canal respectif (31, 32) sortant de la structure de base de la cabine ;
ou **en ce que**
le distributeur (30) est réalisé en forme de croix ou d'étoile avec une entrée et avec une multitude de sorties, l'entrée du distributeur (30) étant reliée ou susceptible d'être reliée en termes d'écoulement au canal d'aspiration (9) et la multitude de sorties du distributeur (30) étant reliées ou susceptibles d'être reliées en termes d'écoulement à un tronçon de canal respectif (31, 32) sortant de la structure de base de la cabine.

2. Cabine de revêtement par pulvérisation de poudre (1) selon la revendication 1,
dans laquelle le canal d'aspiration (8) prévu dans la structure de base de la cabine est agencé de préférence au centre et le canal d'aspiration (9) est relié en termes d'écoulement à l'intérieur de la cabine par au moins une fente d'aspiration.

3. Cabine de revêtement par pulvérisation de poudre (1) selon la revendication 1 ou 2,
dans laquelle est prévu un moyen de commutation d'écoulement pour établir ou séparer au choix une liaison en termes d'écoulement entre le canal d'aspiration (9) agencé dans la structure de base de la cabine et l'un desdits au moins deux tronçons de canal (31, 32) sortant de la structure de base de la cabine.

4. Cabine de revêtement par pulvérisation de poudre (1) selon la revendication 1 ou 2,
dans laquelle un séparateur de poudre (10, 20) est associé à chacun des tronçons de canal (31, 32) sortant de la structure de base de la cabine, séparateur auquel est relié ou susceptible d'être relié au choix en termes d'écoulement le tronçon de canal correspondant (31, 32) par un moyen de commutation d'écoulement (33, 34) associé au tronçon de canal correspondant (31, 32).

5. Cabine de revêtement par pulvérisation de poudre (1) selon la revendication 3 ou 4,
dans laquelle le moyen de commutation d'écoulement (33, 34) comprend au moins un clapet de valve ou au moins un tiroir de valve et de préférence précisément un clapet de valve ou précisément un tiroir de valve par tronçon de canal (31, 32) sortant de la structure de base de la cabine pour la séparation au besoin d'une liaison en termes d'écoulement entre le tronçon de canal correspondant et un séparateur de poudre (10, 20) associé au tronçon de canal (31, 32).

6. Cabine de revêtement par pulvérisation de poudre (1) selon la revendication 4 ou 5,
dans laquelle le séparateur de poudre comprend un système formant cyclone (21) et/ou un système de filtrage (22).

7. Cabine de revêtement par pulvérisation de poudre (1) selon l'une des revendications 1 à 6,
dans laquelle un premier tronçon de canal (31) sortant de la structure de base de la cabine est relié ou susceptible d'être relié en termes d'écoulement à un premier séparateur de poudre (10), et un second tronçon de canal (32) sortant de la structure de base de la cabine est relié ou susceptible d'être relié en termes d'écoulement à un second séparateur de poudre (20), et le premier séparateur de poudre (10) est associé à un premier type de poudre ou à une première couleur de poudre pulvérisé(e) ou à pulvériser dans la cabine de revêtement par pulvérisation de poudre (1), et le second séparateur de poudre (20) est associé à un second type de poudre ou à une seconde couleur de poudre pulvérisé(e) ou à pulvériser dans la cabine de revêtement par pulvérisation de poudre (1).
